# FASCICULE DE BREVET EUROPEEN

(11) **EP 1 225 394 B1**
(45) Date de publication et mention de la délivrance du brevet: **13.08.2008**
(21) Numéro de dépôt: 02290049.2
(22) Date de dépôt: 10.01.2002
(51) Int. Cl.: F24C 3/10, F23Q 9/04

(54) **Dispositif de support et de positionnement d'un brûleur à gaz dans un appareil de cuisson**
Halte- und Positionierungseinrichtung für Gasbrenner an Kochherden
Holding and positioning device for a gas burner in cookers

(30) Priorité: 18.01.2001 FR 0100681
(43) Date de publication de la demande: 24.07.2002
(73) Titulaire: Thirode Grandes Cuisines Poligny, 39800 Poligny (FR)
(72) Inventeur: Lubrina, Yves, 39800 Poligny (FR); Girod, Michel, 39800 Poligny (FR)
(74) Mandataire: Bloch, Gérard

(56) Documents cités:
- FR-A- 2 603 687
- GB-A- 874 681

## Description

La présente invention se rapporte à un dispositif de support d'un brûleur à gaz monté en porte-à-faux sur une paroi d'un bac de récupération des débordements, et de positionnement du brûleur par rapport à un ensemble de sécurité/allumage fixé sur une autre paroi du bac. GB 874 681 A montre un brûleur à gaz avec un ensemble de sécurité/allumage pour un appareil de cuisson.

Dans le domaine ménager, les brûleurs à gaz sont généralement positionnés directement sur un plan de support, par exemple en acier inoxydable embouti. Un tel montage fixe des brûleurs présente l'avantage que le nettoyage n'exige que peu de manipulations, seule la grille du brûleur étant à retirer. Le plan de support offre une continuité de surface facilement nettoyable. Le positionnement est précis et fiable.

Toutefois, cette solution n'est utilisable que pour des brûleurs de faible puissance, du fait que les brûleurs sont proches du plan de la grille. De plus, le plan de support étant proche de la sortie des flammes du brûleur, les débordements se carbonisent sur le plan et deviennent difficiles à éliminer.

Dans le domaine professionnel, cette solution ne donne souvent pas satisfaction du fait de la limitation de la puissance des brûleurs.

Pour remédier à l'inconvénient concernant la carbonisation des débordements, et les difficultés de nettoyage qui en résultent, il est usuel, dans le domaine professionnel, d'étendre du papier aluminium sur la surface du plan de support, ce papier aluminium étant destiné à être jeté en fin de service, cela afin d'éviter la tâche fastidieuse du nettoyage.

Pour les brûleurs de forte puissance, la plupart des fabricants de matériel professionnel proposent des solutions combinant un brûleur fixe ou démontable, positionné à distance au-dessus d'un dispositif de récupération des débordements, comprenant un bac amovible ou un tiroir de propreté amovible. Certains bacs peuvent recevoir de l'eau, introduite manuellement, pour éviter la carbonisation des graisses.

Les bacs ou tiroirs amovibles supposent des dessus non étanches aux débordements et surtout aux eaux de nettoyage. En effet, il subsiste entre les bacs ou tiroirs et les supports ,et entre les brûleurs (lorsqu'ils sont démontables) et les bacs, des interstices qui, dans la pratique, n'empêchent pas les infiltrations diverses.

De plus, une fois les bacs ou tiroirs retirés, rien n'empêche l'infiltration des projections diverses dans le corps du matériel.

Ces bacs ou tiroirs amovibles sont en fait destinés à recevoir de l'eau, mais en réalité, il sont rarement utilisés avec de l'eau. En effet, le retrait, en fin de service, du tiroir ou bac plein d'eau est contraignant sur le plan ergonomique. Il est même délicat de ne pas renverser son contenu à l'intérieur du matériel (effet de vague, plus ou moins de hauteur de garde) d'autant que ces accessoires sont souvent chauds. Le côté amovible du tiroir ou bac empêche souvent la possibilité d'une arrivée d'eau et impose un remplissage manuel, qui lasse d'autant plus les utilisateurs que l'eau s'évapore rapidement durant le service. Il se pose alors de nouveau le problème de l'attachement des débordements.

De plus, le nettoyage intégral suppose des manipulations nombreuses telles que retrait des grilles, retrait des brûleurs, retrait des bacs, avant d'avoir accès aux parois internes.

Enfin, à proximité de la tête des brûleurs sont placés les moyens de sécurité et d'allumage qui eux restent obligatoirement fixes. Les montages courants ne permettent pas une protection efficace de ces moyens de sécurité et d'allumage. La manipulation fréquente des brûleurs et des bacs conduisent à des chocs répétés qui peuvent engendrer la dégradation prématurée de ces moyens de sécurité et d'allumage.

Pour tenter de remédier à ces inconvénients et apporter une solution à la plupart des problèmes évoqués ci-dessus, il a déjà été proposé d'utiliser un bac à eau soudé étanche, fixe, équipé d'une vidange, offrant des surfaces continues. Au-dessus de ce bac est disposé un ensemble intégrant deux brûleurs solidaires (un brûleur proximal et un brûleur distal), conçu pour une alimentation horizontale en gaz, avec montage en porte-à-faux sur une paroi verticale du bac. Pour chaque brûleur, un ensemble de sécurité et d'allumage (veilleuse/thermocouple/électrode d'allumage) est fixé sur une paroi du bac, avec une protection conçue pour protéger cet ensemble des chocs et des débordements.

L'avantage principal de cette solution consiste dans une hygiène quasi idéale. Le bac profond est dans la pratique toujours utilisé avec de l'eau, dans la mesure où l'usage est très aisé (aucune manipulation du bac). Une arrivée d'eau fixe sur la paroi avant du bac est même disponible, permettant avec la vidange de série (équipée d'une bonde surverse) une grande facilité d'usage. Les nettoyages courants ne nécessitent pas de manipulation d'accessoires. La vidange du bac, suivie d'un coup de douchette suffit en règle générale, même sans retrait de la grille. En cas de nécessité de nettoyage du fond du bac à l'aide d'une éponge, l'ensemble brûleur peut être retiré sans outil, pour dégager la surface lisse du fond du bac. Le bac étanche et fixe offre une solution étanche, sans aucune possibilité d'infiltration des débordements. En ce qui concerne la fiabilité, la veilleuse, le thermocouple et l'électrode d'allumage sont bien protégés des chocs et des débordements.

Il reste toutefois certains inconvénients. Ainsi, compte tenu du poids et de la longueur de l'ensemble de deux brûleur, il est difficile d'assurer un positionnement relatif brûleur/veilleuse précis, tant en hauteur (risque d'affaissement sous le poids de l'ensemble de brûleurs) que latéralement (gauche/droite). Un affaissement de l'ensemble de brûleurs entraîne une chute du rendement notamment du brûleur distal, du fait de l'éloignement du brûleur par rapport au fond de casserole, et peut conduire à des échauffements des parois du bac. Un autre inconvénient concerne les problèmes de fiabilité ; en effet, si le positionnement est bien fait à l'origine, les manipulations répétées de l'ensemble de brûleurs peut générer un affaissement plus ou moins prononcé de l'ensemble.

Pour tenter de remédier à ce problème d'affaissement, il est possible d'ajouter des "béquilles" reposant sur le fond. Toutefois, de telles "béquilles" sont en contact avec l'eau du bac et entravent le nettoyage du fond à l'éponge, sans retrait du brûleur.

L'ensemble de brûleurs doit être monté en porte-à-faux sur la paroi avant du bac. La nécessité de pouvoir démonter l'ensemble de brûleurs sans outil, pour le nettoyage, rend très délicat l'obtention du compromis avec un serrage minimal permettant néanmoins une immobilisation suffisante pour assurer le positionnement des brûleurs. C'est la raison pour laquelle, dans la pratique, ou'bien l'utilisateur démonte couramment l'ensemble de brûleurs et ses fixations ne sont pas très serrées, le positionnement étant alors aléatoire, ou bien la fixation est serrée pour améliorer le positionnement, et l'utilisateur ne démonte généralement plus les brûleurs.

Cette solution, même si elle constitue un progrès réel, reste donc encore perfectible tant en ce qui concerne la nettoyabilité, le précision de positionnement des brûleurs par rapport à aux veilleuses, le rendement de combustion (positionnement des brûleurs par rapport à la grille) et la fiabilité/longévité affectée par les démontages et remontages en vue du nettoyage, qui altèrent la précision de positionnement.

La présente invention vise un dispositif de support et de positionnement de brûleurs à gaz qui remédie aux inconvénients des solutions connues, en offrant simultanément une possibilité de montage/démontage très simple et en garantissant néanmoins un positionnement relatif brûleur/veilleuse très précis, et fiable dans le temps. L'invention vise par ailleurs un dispositif de support et de positionnement de brûleurs à gaz qui assure les fonctions recherchées de montage/démontage et positionnement moyennant un coût réduit et sans entrave à la possibilité de nettoyage des surfaces.

L'invention a pour objet un dispositif de support d'un brûleur à gaz monté en porte-à-faux sur une paroi d'un bac de récupération des débordements, et de positionnement du brûleur par rapport à un ensemble de sécurité/allumage fixé sur une autre paroi dudit bac. Le brûleur et l'ensemble de sécurité/allumage comportent des moyens de support et de positionnement coopérant lors du montage du brûleur pour permettre au brûleur de prendre appui et de se positionner sur l'ensemble de sécurité/allumage en vue de l'immobilisation du brûleur par rapport à l'ensemble de sécurité/allumage.

De préférence, lesdits moyens comprennent sur le brûleur une ouverture débouchant vers le bas et sur l'ensemble de sécurité/allumage un moyen d'accrochage ayant une forme adaptée à celle de ladite échancrure pour mettre à l'ouverture du brûleur de s'emboîter depuis le haut sur ledit moyen d'accrochage et de s'y accrocher de manière à assurer l'immobilisation du brûleur tant vers le bas que vers les côtés.

De préférence, l'ouverture d'accrochage sur le brûleur peut être ménagée dans le bord inférieur d'une jupe extérieure s'étendant vers le bas sur le pot de brûleur, et le moyen d'accrochage sur l'ensemble de sécurité/ allumage peut être constitué par une tige faisant saillie horizontalement sur ledit ensemble et comportant à son extrémité libre un col de section réduite adapté à ladite échancrure, suivi d'une tête de section accrue.

Ainsi, lors du montage du brûleur, l'échancrure du brûleur vient s'emboîter sur le col de ladite tige, ce qui assure l'immobilisation du brûleur par rapport à l'ensemble de sécurité/allumage.

De préférence, dans le cadre de l'invention, le brûleur ainsi positionné peut comprendre un ensemble de deux brûleurs solidaires, à savoir un brûleur proximal et un brûleur distal, l'un proche et l'autre éloigné de l'emplacement de montage de l'ensemble de brûleurs sur la paroi avant du bac, seul le brûleur distal et l'ensemble de sécurité/allumage associé à ce brûleur distal comportant un dispositif de support et de positionnement suivant l'invention.

La tige constituant le moyen d'accrochage et faisant saillie sur l'ensemble de sécurité/allumage peut être avantageusement solidaire d'une platine supportant également la veilleuse, le thermocouple et l'électrode d'allumage de cet ensemble.

De préférence, cette tige peut être disposée en dessous de la veilleuse, du thermocouple et de l'électrode d'allumage, l'ensemble étant recouvert d'un capot de protection.

Grâce au dispositif suivant l'invention, le brûleur ou l'ensemble de deux brûleurs solidaires est dépourvu de fixation rigide avec serrage sur l'avant du bac. Chaque brûleur ou le brûleur distal de l' ensemble de deux brûleurs solidaires peut comporter une jupe avec plusieurs échancrures réparties sur sa circonférence, permettant plusieurs positions d'accrochage selon différentes configurations.

Grâce à la conformation particulière des moyens d'accrochage, il suffit de monter le brûleur ou l'ensemble de brûleurs solidaires sur la paroi avant du bac, sans fixation rigide impliquant un serrage, ce qui n'exige aucune manipulation particulière, et de le poser sur le moyen d'accrochage prévu sur l'ensemble de sécurité/allumage fixé sur une paroi latérale du bac. L'immobilisation précise du brûleur est alors assurée par son propre poids. Aucune fixation du brûleur ou de l'ensemble de brûleurs n'étant nécessaire, ni sur la paroi avant du bac, ni sur la paroi latérale, le brûleur ou l'ensemble de deux brûleurs solidaires peut être retiré instantanément en vue du nettoyage.

Il est à noter que le maintien du brûleur ou de l'ensemble de brûleurs ne génère pas de couple sur la paroi du bac, qui peut ainsi avoir une épaisseur réduite.

Suivant un mode de réalisation préféré, plusieurs ensembles de deux brûleurs solidaires peuvent être montés de cette manière sur un même bac à eau équipé avantageusement d'une vidage et d'une arrivée d'eau, ce qui facilite encore le nettoyage dans la mesure où il est nécessaire de vidanger et de rincer un seul bac comportant moins de surfaces exposées et moins d'angles.

En se référant aux dessins schématiques annexés, on va décrire ci-après plus en détail un mode de réalisation illustratif et non limitatif d'un dispositif de support et de positionnement conforme à l'invention ; sur les dessins :
la figure 1 est une vue en perspective de dessus d'un ensemble de cuisson comprenant plusieurs brûleurs disposés au-dessus d'un bac à eau commun ;
la figure 2 est une vue en perspective d'un ensemble de deux brûleurs (brûleur proximal, brûleur distal) du dispositif de la figure 1 et des ensembles de sécurité/allumage associés à ces brûleurs ;
la figure 3 représente l'ensemble de sécurité/allumage associé au brûleur proximal de la figure 2, et les moyens de support et de positionnement de ce brûleur ;
la figure 4 est une vue éclatée de l'ensemble de sécurité/allumage de la figure 3 et des moyens d'accrochage associés à cet ensemble ;
la figure 5 est une vue détaillée montrant les moyens de support et de positionnement du brûleur distal de la figure 2.

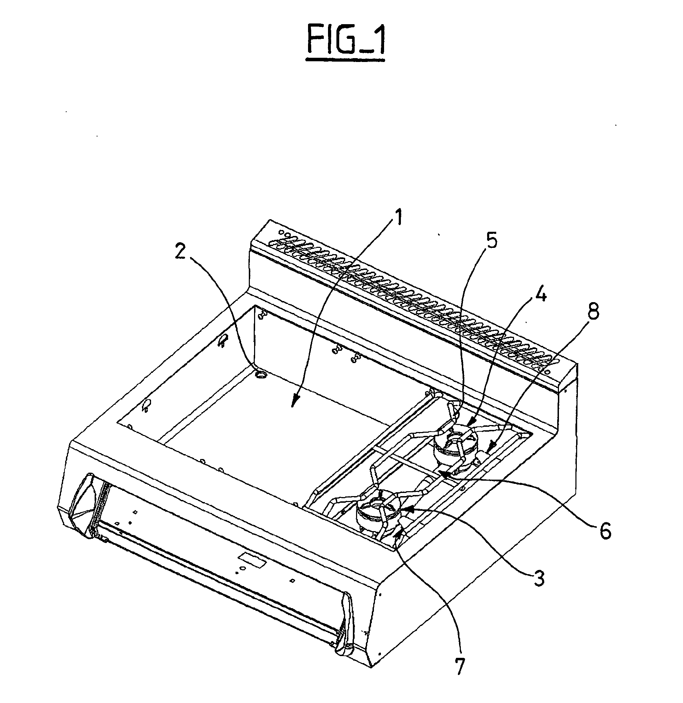

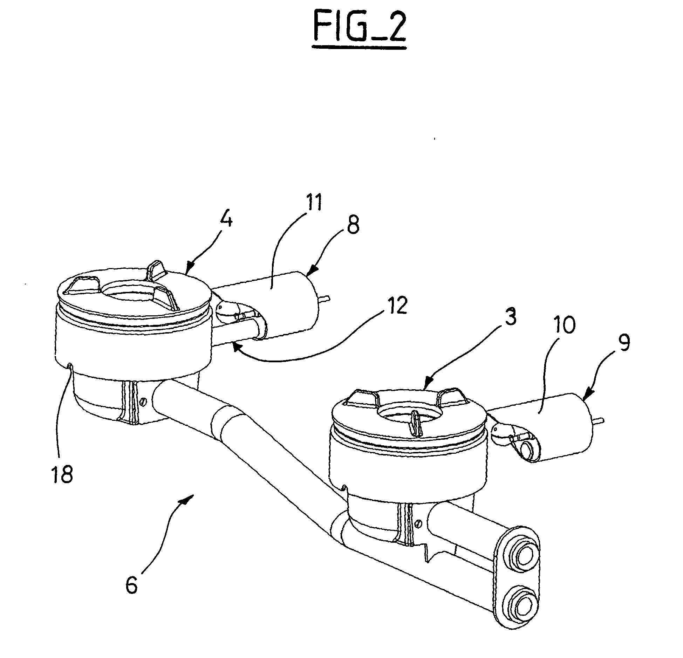

Selon la figure 1, un bac à eau 1 d'un plan de cuisson comprenant plusieurs brûleurs à gaz installé à distance au-dessus du fond du bac 1 comporte à l'arrière une vidange 2 et à l'opposé, donc à l'avant, une alimentation en eau non représentée. Le plan de cuisson peut comportant par exemple quatre ou même six brûleurs. Sur la figure 1, on n'a représenté qu'un seul ensemble de deux brûleurs comprenant un brûleur avant ou proximal 3 et un brûleur arrière ou distal 4 qui sont recouverts par une grille commune 5. Tel que cela apparaît surtout sur la figure 2, les deux brûleurs 3 et 4 sont réunis sous la forme d'un ensemble de brûleurs solidaires 6 monté en porte-à-faux sur la paroi avant du bac 1, par des moyens de montage sans serrage, ne nécessitant pas d'outil.

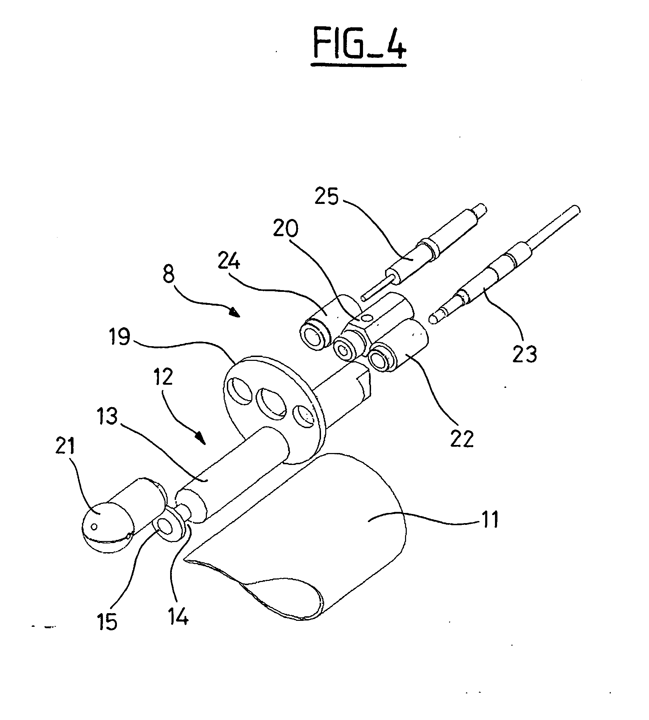

Deux ensembles de sécurité/allumage 7, 8 sont associés aux brûleurs 3 et 4, respectivement, chacun des ensembles 7, 8 comprenant une veilleuse, un thermocouple et une électrode d'allumage, comme cela sera décrit plus en détail avec référence à la figure 4.

Les deux ensembles de sécurité/allumage 7, 8 sont montés sur une paroi latérale du bac 1.

Selon la figure 2, l'ensemble de sécurité/allumage 9 associé au brûleur proximal 3 de l'ensemble de brûleurs 6 et monté sur une paroi latérale du bac non représenté ici, se trouve, de façon usuel, à faible distance du brûleur 3, l'ensemble étant recouvert d'un capot de protection 10 qui protège l'ensemble 9 à la fois des chocs et des débordements éventuels.

L'ensemble de sécurité/allumage 8 associé au brûleur distal 4 et monté sur la même paroi latérale du bac comporte, en plus de son capot de protection 11 comparable au capot 10 de l'ensemble 9, des moyens d'accrochage 12 qui coopèrent avec le brûleur 4 pour assurer le support et le positionnement de l'ensemble de brûleurs 6, donc à la fois du brûleur 4 et du brûleur 3.

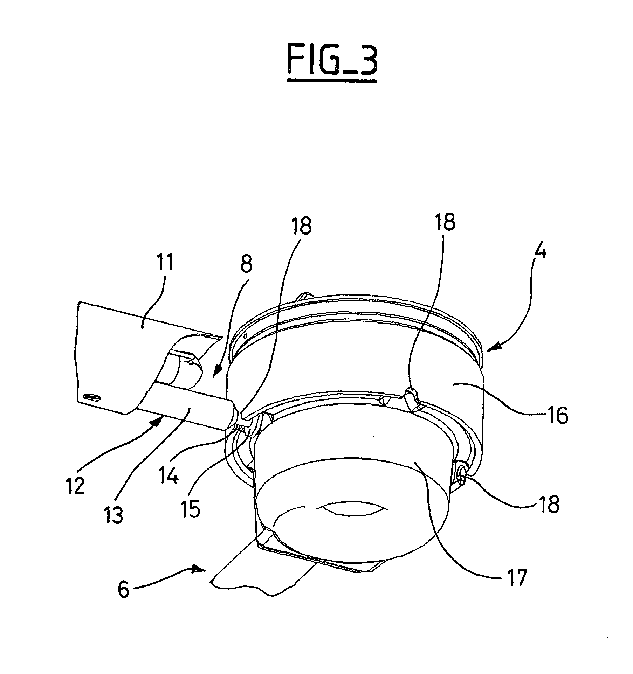

Comme le montre la figure 3, les moyens d'accrochage 12 comprennent un élément 13 en forme de tige faisant saillie horizontalement en porte-à-faux sur l'ensemble de sécurité/allumage 8. La tige 13 comporte, à son extrémité libre, un col 14 de section réduite suivi d'une tête 15 de section accrue.

Le brûleur 4 comporte, pour coopérer avec le moyen d'accrochage 12, une jupe 16 qui fait saillie vers le bas autour du pot de brûleur 17 et qui comporte dans son bord inférieur plusieurs échancrures 18 réparties sur le pourtour. Dans l'exemple illustré, la jupe 16 présente trois échancrures 18 décalées de 90° les unes par rapport aux autres.

Sur la figure 4 qui est une vue éclatée de l'ensemble de sécurité/allumage 8 avec le moyen de positionnement 12, on reconnaît que la tige 13 est solidaire, au voisinage de son extrémité opposée à la tête 15, d'une platine de fixation 19 qui comporte par ailleurs des trous de passages pour l'injecteur 20 d'une veilleuse 21, pour une monture 22 d'un thermocouple 23 et pour une monture 24 d'une électrode d'allumage 25.

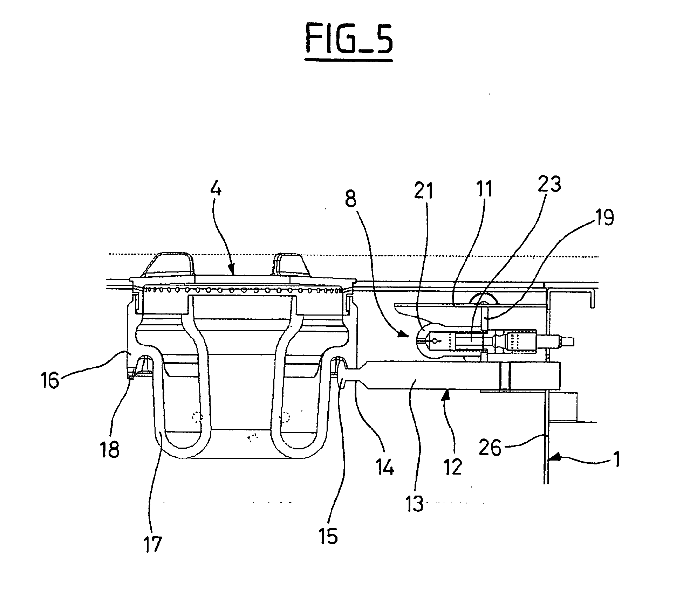

On retrouve tous ces éléments sur la figure 5 qui montre, entre autres, la fixation de l'ensemble de sécurité/allumage 8 avec le moyen d'accrochage 12 sur la paroi latérale 26 du bac 1 et la coopération du brûleur 4 au niveau d'une échancrure 18, avec le col 14 de la tige 13 du moyen d'accrochage 12.

Grâce à la prévision de plusieurs échancrures 18 dans la jupe 16 du brûleur 4, il est possible de monter un même ensemble 6 de deux brûleurs 3 et 4 indifféremment à droite (figure 1) ou à gauche dans un même bac 1 en accrochant le brûleur 4 sur un ensemble de sécurité/allumage 8 monté soit sur la paroi latérale 26 de droite, soit sur la paroi latérale opposée du bac 1 (sur la figure 1, l'ensemble de brûleurs 6 de gauche et les ensembles de sécurité/allumage correspondant ne sont pas représentés).

Bien entendu, les moyens d'accrochage 12 associés à un ensemble de sécurité/allumage 8 pourraient également être utilisés en tant que moyens de support et de positionnement pour un brûleur individuel plutôt que pour un ensemble de deux brûleurs solidaires, comme dans l'exemple illustré.

Par ailleurs, les moyens d'accrochage 12 et les moyens correspondant prévus sur le brûleur pourraient être différents de ceux représentés à titre d'exemples illustratifs sur les dessins, dans la mesure où ces moyens sont conçus pour garantir une immobilisation précise du brûleur en hauteur et latéralement, sans que la pose et la dépose instantanées du brûleur n'exige le moindre outil.

## Revendications

1. Dispositif de support d'un brûleur (4) à gaz monté en porte-à-faux sur une paroi d'un bac (1) de récupération des débordements, et de positionnement du brûleur par rapport à un ensemble de sécurité/allumage (8) fixé sur une autre paroi dudit bac, **caractérisé par le fait que** le brûleur (4) et l'ensemble de sécurité/allumage (8) comportent des moyens (12, 18) coopérant lors du montage du brûleur pour permettre au brûleur de prendre appui sur l'ensemble de sécurité/allumage en vue de l'immobilisation du brûleur par rapport à l'ensemble de sécurité/allumage.

2. Dispositif suivant la revendication 1, **caractérisé par le fait que le fait que** lesdits moyens comprennent sur le brûleur (4) une ouverture (18) débouchant vers le bas et sur l'ensemble de sécurité/allumage (8) un moyen d'accrochage (12) ayant une forme adaptée à la forme de ladite ouverture pour permettre à l'ouverture de s'y accrocher depuis le haut en vue de l'immobilisation du brûleur en hauteur et latéralement.

3. Dispositif suivant la revendication 2, **caractérisé par le fait que** ladite ouverture comprend au moins une échancrure (18) ménagée dans le bord inférieur d'une jupe extérieure (16) s'étendant vers le bas sur le pot de brûleur, et que le moyen d'accrochage (12) comprend une tige (13) faisant saillie horizontalement sur l'ensemble de sécurité/allumage (8) et comportant à son extrémité libre un col (14) de section réduite suivi d'une tête (15) de section accrue.

4. Dispositif suivant l'une quelconque des revendications précédentes, **caractérisé par le fait que** le brûleur (4) fait partie d'un ensemble de deux brûleurs solidaires (6) comprenant un brûleur proximal (3) et un brûleur distal (4), le premier proche et le second éloigné de l'emplacement de montage de l'ensemble de brûleurs sur la paroi du bac, seul le brûleur distal (4) et l'ensemble de sécurité/allumage (8) associé au brûleur distal comportant des moyens de support et de positionnement.

5. Dispositif suivant la revendication 3 ou 4, **caractérisé par le fait que** la tige (13) du moyen d'accrochage (12) est solidaire d'une platine de fixation (19) supportant également la veilleuse (20, 21) le thermocouple (22, 23) et l'électrode d'allumage (24, 25) de l'ensemble de sécurité/allumage (8).

6. Dispositif suivant l'une quelconque des revendications précédentes, **caractérisé par le fait que** le moyen d'accrochage (12) est disposé en dessous de l'ensemble de sécurité/allumage (8) recouvert d'un capot de protection (11).

## Claims

1. Device for supporting a gas burner (4) mounted cantilever fashion on a wall of a spill recovery tank (1) and for locating the burner relative to a safety/igniter system (8) fixed to another wall of said tank, **characterized in that** the burner (4) and the safety/igniter system (8) include means (12, 18) cooperating when the burner is mounted to enable the burner to rest on the safety/igniter system in order to immobilize the burner relative to the safety/igniter system.

2. Device according to Claim 1, **characterized in that** said means include, on the burner (4), a downwardly open opening (18) and, on the safety/igniter system (8), locating means (12) having a shape matching the shape of said opening so as to enable the opening to locate thereon from above in order to immobilize the burner vertically and laterally.

3. Device according to Claim 2, **characterized in that** said opening includes at least one notch (18) formed in the bottom edge of an external skirt (16) extending downwardly over the burner pot and the locating means (12) include a rod (13) projecting horizontally from the safety/igniter system (8) and having at its free end a neck (14) of smaller section followed by a head (15) of larger section.

4. Device according to any one of the preceding claims, **characterized in that** the burner (4) is part of an assembly (6) of two burners joined together and comprising a proximal burner (3) and a distal burner (4), the former close to and the second far away from the mounting of the burner assembly on the wall of the tank, only the distal burner (4) and the safety/igniter system (8) associated with the distal burner including support and locating means.

5. Device according to Claim 3 or 4, **characterized in that** the rod (13) of the locating means (12) is fastened to a fixing plate (19) also supporting the pilot light (20, 21), the thermocouple (22, 23), and the igniter electrode (24, 25) of the safety/igniter system (8).

6. Device according to any one of the preceding claims, **characterized in that** the locating means (12) are disposed under the safety/igniter system (8) covered by a protective cap (11).

## Patentansprüche

1. Vorrichtung zum Tragen eines Gasbrenners (4), der freitragend auf eine Wand einer Überlauf-Auffangwanne (1) montiert wird, und zum Positionieren des Brenners bezüglich einer Sicherheits-/Zündeinheit (8), die an einer anderen Wand der Wanne befestigt wird, **dadurch gekennzeichnet, dass** der Brenner (4) und die Sicherheits-/Zündeinheit (8) Mittel (12, 18) aufweisen, die bei der Montage des Brenners zusammenwirken, um es dem Brenner zu ermöglichen, auf der Sicherheits-/Zündeinheit aufzuliegen, um den Brenner bezüglich der Sicherheits-/Zündvorrichtung zu blockieren.

2. Vorrichtung nach Anspruch 1, **dadurch gekennzeichnet, dass** die Mittel auf dem Brenner (4) eine Öffnung (18) aufweisen, die nach unten und auf die Sicherheits-/Zündeinheit (8) mündet, wobei ein Einrastmittel (12) eine an die Form der Öffnung angepasste Form hat, um es der Öffnung zu ermöglichen, von oben darauf einzurasten, um den Brenner in der Höhe und seitlich zu blockieren.

3. Vorrichtung nach Anspruch 2, **dadurch gekennzeichnet, dass** die Öffnung mindestens eine Aussparung (18) aufweist, die im unteren Rand einer äußeren Schürze (16) angeordnet ist, die sich nach unten auf dem Brennertopf erstreckt, und dass das Einrastmittel (12) eine Stange (13) aufweist, die waagrecht an der Sicherheits-/Zündeinheit (8) vorsteht und an ihrem freien Ende einen Hals (14) mit reduziertem Querschnitt gefolgt von einem Kopf (15) mit vergrößertem Querschnitt aufweist.

4. Vorrichtung nach einem der vorhergehenden Ansprüche, **dadurch gekennzeichnet, dass** der Brenner (4) Teil einer Einheit von zwei fest miteinander verbundenen Brennern (6) ist, die einen nahen Brenner (3) und einen fernen Brenner (4) aufweist, der erste nah und der zweite entfernt von der Montagestelle der Einheit von Brennern auf der Wand des Behälters, wobei nur der ferne Brenner (4) und die dem fernen Brenner zugeordnete Sicherheits-/Zündeinheit (8) Trag- und Positioniermittel aufweisen.

5. Vorrichtung nach Anspruch 3 oder 4, **dadurch gekennzeichnet, dass** die Stange (13) des Einrastmittels (12) fest mit einer Befestigungsplatte (19) verbunden ist, die ebenfalls den Zündbrenner (20, 21), das Thermoelement (22, 23) und die Zündelektrode (24, 25) der Sicherheits-/Zündeinheit (8) trägt.

6. Vorrichtung nach einem der vorhergehenden Ansprüche, **dadurch gekennzeichnet, dass** das Einrastmittel (12) unter der Sicherheits-/Zündeinheit (8) angeordnet ist, die mit einer Schutzkappe (11) bedeckt ist.
